# EUROPÄISCHE PATENTANMELDUNG

(11) **EP 2 282 164 A1**
(43) Veröffentlichungstag der Anmeldung: **09.02.2011**
(21) Anmeldenummer: 10011804.1
(22) Anmeldetag: 04.10.2007
(51) Int. Cl.: G01B 11/25

(54) **Verfahren und Vorrichtung zur Bestimmung der 3D-Koordinaten eines Objekts**

(30) Priorität: 11.10.2006 DE 102006048234
(62) Teilanmeldung aus: 07019461.8
(71) Anmelder: Steinbichler Optotechnik GmbH, 83115 Neubeuern (DE)
(72) Erfinder: Steinbichler, Markus, Dr., 83115 Neubeuern (DE); Mayer, Thomas, Dipl.-Ing., 83059 Kolbermoor (DE); Estermann, Markus, 83547 Babensham (DE)
(74) Vertreter: Zinnecker, Armin

(57) **Zusammenfassung**

Ein Verfahren dient zur Bestimmung der 3D-Koordinaten eines Objekts (2). Bei dem Verfahren wird ein Streifenmuster auf das Objekt (2) projiziert. Das von dem Objekt (2) reflektierte Licht wird aufgenommen uns ausgewertet. Um ein derartiges Verfahren zu verbessern wird das Streifenmuster durch ein bildgebendes Element auf das Objekt (2) projiziert. Die bestimmten 3D-Koordinaten des Objekts (2) werden mit den Soll-3D-Koordinaten des Objekts verglichen. Die Formabweichung wird auf das Objekt (2) projiziert (einzige Figur).

## Beschreibung

Die Erfindung betrifft ein Verfahren zur Bestimmung der 3D-Koordinaten eines Objekts und eine Vorrichtung zur Durchführung eines derartigen Verfahrens.

Optische 3D-Meßverfahren zur Bestimmung der 3D-Koordinaten eines Objekts sind bereits bekannt. Dabei sind die Verfahren der aktiven, bildhaften Triangulation anderen Meßverfahren hinsichtlich der Datenqualität und der Meßgeschwindigkeit deutlich überlegen. Bei den Verfahren der aktiven, bildhaften Triangulation wird das zu vermessende Objekt mit einem oder mehreren Streifenmustern beleuchtet und mit einer oder mehreren Kameras, insbesondere digitalen Flächenkameras, unter einem oder mehreren bestimmten Winkeln zur Projektion des Streifenmusters beobachtet. Es können Streifenmuster verschiedener Richtung, Frequenz (Streifenabstand, Periode) und/oder Amplitudenverlaufs verwendet werden.

Die Berechnung der 3D-Koordinaten (3D-Daten) des gemessenen Objekts erfolgt üblicherweise in einem Auswerterechner über die Auswertung der von,der Kamera oder den Kameras erfaßten Streifenbilder. Hierbei kommen das Graycode-Verfahren, das Phasenshift-Verfahren, das Mehrwellenlängen-Verfahren oder ein sonstiges Verfahren oder eine Kombination dieser Verfahren zum Einsatz.

Bei bekannten Lösungen sind die zu projizierenden Streifenmuster oder sonstigen Muster auf einem Glasdia aufgebracht. Die Modifikation des Musters während des Meßablaufs erfolgt über eine Drehung und/oder Verschiebung des Diaträgers im Strahlengang des Projektors. Dies führt zu einer relativ langen Meßzeit, die durch das notwendige hochgenaue Verschieben und/oder Drehen des Glasdias und durch die Zeit der Bilddatenaufnahme und Bildübertragung zum Auswerterechner bedingt ist.

Aufgabe der Erfindung ist es, ein verbessertes Verfahren und eine verbesserte Vorrichtung der eingangs angegebenen Art vorzuschlagen.

Erfindungsgemäß wird diese Aufgabe bei einem Verfahren der eingangs angegebenen Art durch die Merkmale des Anspruchs 1 gelöst. Bei einer Vorrichtung der eingangs angegebenen Art erfolgt die erfindungsgemäße Lösung durch die Merkmale des Anspruchs 10.

Bei dem erfindungsgemäßen Verfahren zur Bestimmung der 3D-Koordinaten eines Objekts wird ein Streifenmuster auf das Objekt projiziert. Das von dem Objekt reflektierte Licht wird aufgenommen und ausgewertet. Das Streifenmuster wird durch ein bildgebendes Element auf das Objekt projiziert. Insbesondere handelt es sich um ein bildgebendes Element zur schnellen Musterprojektion. Das bildgebende Element kann ansteuerbar sein. Vorzugsweise ist das bildgebende Element pixelweise ansteuerbar. Durch die Verwendung eines bildgebenden Elements wird der Einsatz eines bewegten Glasdias überflüssig gemacht. Hierdurch sind kurze Meßzeiten erreichbar.

Vorteilhafte Weiterbildungen sind in den Unteransprüchen beschrieben.

Das Streifenmuster wird vorzugsweise durch ein LCOS-display (Liquid Crysal On Silicon-Display), ein Spiegelarray und/oder ein LCD-Display (Liquid Crystal Display) auf das Objekt projiziert.

Vorteilhaft ist es, wenn das Licht der Lichtquelle zum Erzeugen des Streifenmusters über einen Flüssigkeitslichtleiter dem Objekt zugeführt wird. Auch hierdurch werden kurze Meßzeiten realisierbar. Es können Lampen in einer externen Lichtquelle eingesetzt werden, die einem Projektor das Projektorlicht über einen Flüssigkeitslichtleiter zuführen. Hierdurch kann mit sehr hohen Lampenleistungen gearbeitet werden, da die Verlustleistung der Lampe nicht den für die Systemgenauigkeit relevanten Projektoraufbau aufheizt, was zu thermischen Deformationen des Aufbaus führen könnte, sondern nur das für die Systemgenauigkeit nicht relevante, externe Lampengehäuse. Eine hohe Lampenleistung ermöglicht eine kurze Meßzeit durch kurze Belichtungszeiten der Kamera.

Eine weitere vorteilhafte Weiterbildung ist **dadurch gekennzeichnet, daß** die aufgenommenen Bilddaten in einem Kameraspeicher zwischengespeichert werden und anschließend zur Auswertung weitergeleitet werden. Auch dies dient zur weiteren Verkürzung der Meßzeit. Insbesondere können Hochgeschwindigkeitskameras mit CCD-Technologie oder CMOS-Technologie verwendet werden, die einen Kameraspeicher aufweisen, in dem die Bilddaten gespeichert werden, wobei die relativ langsame Datenübertragung zur Auswerteeinrichtung erst nach der eigentlichen Erfassung der Bilddaten bzw. der Mustersequenz durchgeführt wird.

Vorteilhaft ist es, wenn die Triangulationsbasis und/oder der Triangulationswinkel veränderbar sind. Hierdurch können verschiedene Meßvolumina realisiert werden. Stattdessen oder zusätzlich können die Meßgenauigkeiten verändert werden.

Nach einer weiteren vorteilhaften Weiterbildung wird die örtliche Reflektivität des Objekts bestimmt und wird die Helligkeit des Streifenmusters örtlich an die Reflektivität des Objekts angepaßt. Dies ist insbesondere bei der Messung von Objekten mit unterschiedlicher Reflektivität von Bedeutung. Hier kann die Projektion eines in der Helligkeit lokal an die Objektreflektivität angepaßten Streifenmusters erfolgen. Dies dient zur optimalen Nutzung des Kameradynamikbereichs und zur lückenlosen Erfassung der Objektoberfläche.

Dabei erfolgen die Bestimmung der Reflektivität des Objekts und die Anpassung der Helligkeit des Streifenmustes vorzugsweise iterativ. Hierzu kann folgendes Verfahren durchgeführt werden:

In einem ersten Schritt wird die Objekthelligkeit mit der Kamera bestimmt. In einem zweiten Schritt erfolgt eine "grobe" 3D-Messung ohne angepaßtes Projektionsmuster. Hierfür geeignete Verfahren sind das Graycode-Verfahren, das Phasenshift-Verfahren, das Mehrwellenlängen-Verfahren oder ein sonstiges Verfahren oder eine Kombination dieser Verfahren. In einem dritten Schritt wird ein Streifenprojektionsmuster mit einer an die Objekthelligkeit angepaßten Helligkeitsverteilung bestimmt. Die Bestimmung der Helligkeitsanpassung der Projektionspixel kann aus der "groben" 3D-Koordinate und der Sensorkalibrierung für jeden Kamerapunkt erfolgen. In einem vierten Schritt wird eine "genaue" 3D-Messung mit einem angepaßten Projektionsmuster durchgeführt, also mit einem Projektionsmuster, dessen Helligkeit lokal an die Objektreflektivität angepaßt ist. Auch hierfür sind die oben für den zweiten Schritt mitgeteilten Verfahren (Graycode etc.) geeignet. In einem fünften, iterativen Schritt können die Schritte drei und vier wiederholt werden. Dies kann mehrmals geschehen. Durch das iterative Vorgehen kann die Genauigkeit gesteigert werden.

Eine weitere vorteilhafte Weiterbildung ist **dadurch gekennzeichnet, daß** die bestimmten 3D-Koordinaten des Objekts mit den Soll-3D-Koordinaten des Objekts verglichen werden und daß die Formabweichung auf das Objekt projiziert wird. Die Auswertung der Formabweichung des gemessenen Objekts im Verhältnis zu den Solldaten dieses Objekts kann unmittelbar nach der Messung erfolgen. Die Formabweichung kann auf das Objekt projiziert werden, um sie dort sichtbar zu machen. Vorzugsweise wird die Formabweichung in einer Falschfarbendarstellung auf das Obekt projiziert. Die verschiedenen Farben können verschiedene Ausmaße der Formabweichung repräsentieren. Es sind allerdings auch andere Darstellungsarten möglich, beispielsweise Höhenlinien.

Die Projizierung der Formabweichung auf das Objekt kann in folgenden Schritten erfolgen: In einem ersten Schritt wird eine 3D-Messung des Objekts durchgeführt. In einem zweiten Schritt erfolgen eine automatische Ausrichtung und eine Berechnung der Abweichungen zu den Solldaten. Die Solldaten können insbesondere in einem CAD-Solldatensatz gespeichert sein. In einem dritten Schritt wird das Projektionsmuster für jeden 3D-Objektpunkt berechnet bzw. bestimmt. Vorzugsweise wird hierfür ein LCOS-Display verwendet. Es wird also das Projektionsmuster des LCOS-Displays für jeden 3D-Objektpunkt berechnet bzw. bestimmt. Die Berechnung bzw. Bestimmung des Projektionsmustes erfolgt vorzugsweise für jeden Farbkanal. Für die Falschfarbendarstellung kann ein RGB-Farbrad /(Rot-Grün-Blau-Farbrad) verwendet werden. Bei der Berechnung bzw. Bestimmung des Projektionsmusters werden korrespondierende Projektionspixel für jedes Kamerapixel berechnet bzw. bestimmt. In einem vierten Schritt kann das RGB-Farbrad angesteuert werden. Die Ansteuerung des RGB-Farbrades erfolgt synchronisiert mit dem bildgebenden Element, insbesondere dem LCOS-Display, für die drei Farbkanäle zur Projektion der Formabweichung auf das gemessene Objekt.

Bei einer Vorrichtung zur Bestimmung der 3D-Koordinaten eines Objekts erfolgt die Lösung der Aufgabe der Erfindung durch die Merkmale des Anspruchs 10. Die Vorrichtung umfaßt einen Projektor zum Projizieren eines Streifenmustes auf das Objekt, eine oder mehrere Kameras zum Aufnehmen des von dem Objekt reflektierten Lichts und eine Auswerteinrichtung zur Auswertung der aufgenommenen Bilder. Der Projektor weist ein bildgebendes Element zum Projizieren des Streifenmustes auf das Objekt auf.

Weitere vorteilhafte Weiterbildungen sind in den weiteren Unteransprüchen beschrieben.

Der Projektor weist vorzugsweise ein LCOS-Display, ein Spiegelarray und/oder ein LCD-Display zum Projizieren des Streifenmusters auf das Objekt auf.

Vorteilhaft ist es, wenn eine Lichtquelle und ein Flüssigkeitslichtleiter zum Zuführen des Lichts zum Projektor vorhanden sind.

Die Kamera kann einen Kameraspeicher zum Zwischenspeichern der aufgenommenen Bilddaten aufweisen.

Vorteilhaft ist es, wenn die Triangulationsbasis und/oder der Triangulationswinkel veränderbar sind.

Vorzugsweise ist eine Auswerteeinrichtung vorhanden zum Bestimmen der örtlichen Reflektivität des Objekts und zum örtlichen Anpassen der Helligkeit des Streifenmusters an die Reflektivität des Objekts. Die Bestimmung der Reflektivität des Objekts und die Anpassung der Helligkeit des Streifenmusters können iterativ erfolgen.

Eine weitere vorteilhafte Weiterbildung ist gekennzeichnet durch eine Einrichtung zum Vergleichen der bestimmten 3D-Koordinaten des Objekts mit den Soll-3D-Koordinaten des Objekts und zum Projizieren der Formabweichung auf das Objekt. Vorzugsweise ist ein Farbrad zum Projizieren der Formabweichung in einer Falschfarbendarstellung auf das Objekt vorgesehen.

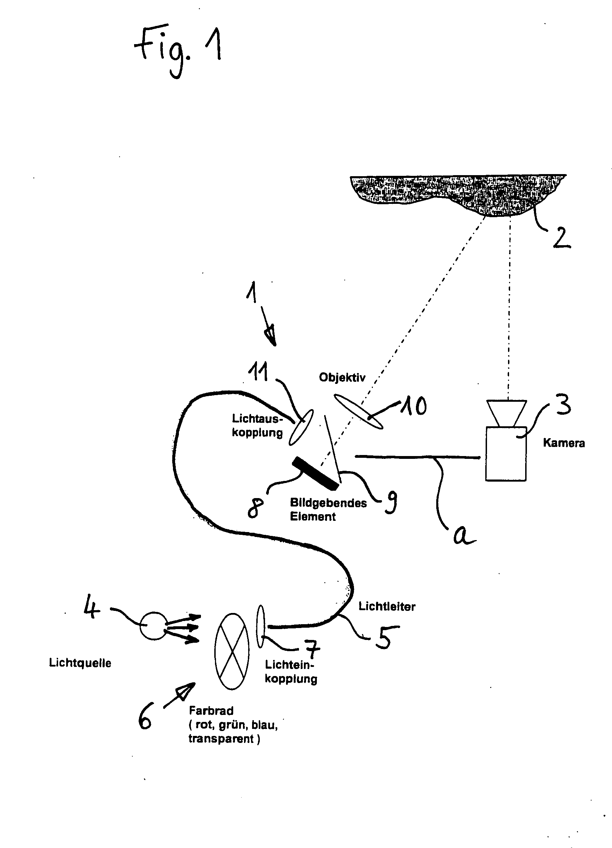

Ein Ausführungsbeispiel der Erfindung wird nachstehend anhand der beigefügten Zeichnung im einzelnen erläutert. In der Zeichnung zeigt die
- einzige Figur: eine Vorrichtung zur Bestimmung der 3D- Koordinaten eines Objekts in einer schematischen Darstellung.

Die in der einzigen Figur gezeigte Vorrichtung zur Bestimmung der 3D-Koordinaten eines Objekts 2 umfaßt einen Projektor 1, mit dem ein Streifenmuster auf das Objekt 2 projiziert wird, eine Kamera 3 zum Aufnehmen des von dem Objekt 2 reflektierten Lichts und eine in der Zeichnung nicht dargestellte Auswerteeinrichtung zum Auswerten der aufgenommenen Bilder. Der Projektor 1 umfaßt ein bildgebendes Element 8, einen Spiegel 9 und ein Objektiv 10. Bei dem bildgebenden Element 8 handelt es sich insbesondere um ein LCOS-Display, ein Spiegelarray oder ein LCD-Display.

Das Licht für den Projektor 1 stammt von einer Lichtquelle 4, deren Licht über einen Lichtleiter, insbesondere einen Flüssigkeitslichtleiter 5, dem Projektor 1 zugeführt wird. Das Licht aus der Lichtquelle 4 wird über eine Lichteinkopplung 7 in den Flüssigkeitslichtleiter 5 eingekoppelt und über eine Lichtauskopplung 11 auf den Spiegel 9 geworfen, der es auf das bildgebende Element 8 spiegelt, von wo es durch das Objektiv 10 auf das Objekt 2 projiziert wird. Zwischen der Lichtquelle 4 und der Lichteinkopplung 7 ist ein Farbrad 6 vorgesehen. Dabei handelt es sich um ein RGB-Farbrad, das vier Sektoren aufweist, nämlich die Sektoren rot, grün, blau und transparent.

Die Kamera 3 weist einen Kameraspeicher zum Zwischenspeichern der aufgenommenen Bilddaten auf. Die zwischengespeicherten Bilddaten werden anschließend zu der Auswerteeinrichtung zur Auswertung weitergeleitet.

Der Abstand a zwischen dem Projektor 1 und der Kamera 3 bildet die Triangulationsbasis. Diese Triangulationsbasis und der Triangulationswinkel sind veränderbar.

Die Auswerteeinrichtung ermöglicht das Bestimmen der örtlichen Reflektivität des Objekts 2 und die örtliche Anpassung der Helligkeit des Streifenmusters an die Reflektivität des Objekts 2, wobei die Bestimmung der Reflektivität des Objekts 2 und die Anpassung der Helligkeit des Streifenmusters iterativ erfolgen. Ferner umfaßt die Auswerteeinrichtung eine Einrichtung zum Vergleichen der bestimmten 3D-Koordinaten des Objekts 2 mit dem Soll-3D-Koordinaten dieses Objekts und zum Projizieren der Formabweichung auf das Objekt 2 . Durch das Farbrad 6 kann die Formabweichung in einer Falschfarbendarstellung auf das Objekt 2 projiziert werden. Die Auswerteeinrichtung kann einen Rechner umfassen oder von einem Rechner gebildet werden, insbesondere von einem PC.

Durch die Erfindung können kurze Meßzeiten erreicht werden. Eine Probenvorbereitung ist nicht erforderlich. Bei der Lichtquelle 4 kann es sich um eine Hochleistungslichtquelle handeln, insbesondere um eine Glühlampe, eine Entladungslampe und/oder eine oder mehrere Hochleistungs-LEDs. Die Hochleistungslichtquelle 4 befindet sich in einem externen Gehäuse. Dem Projektor 1 wird das Projektorlicht über den Flüssigkeitslichtleiter 5 zugeführt.

Es erfolgt eine Projektion eines in der Helligkeit lokal an die Objektreflektivität angepaßten Streifenmusters, um eine optimale Nutzung des Kameradynamikbereichs zur lückenlosen Erfassung der Objektoberfläche zu gewährleisten, wobei die Berechnung der angepaßten Projektion iterativ erfolgen kann. Es wird die Formabweichung des gemessenen Objekts zu den Solldaten bestimmt, und die Formabweichung wird in einer Falschfarbendarstellung direkt auf das Objekt projiziert, was vorzugsweise unmittelbar nach der Messung erfolgt. Hierfür wird ein mit der Musterprojektion, also der Projektion des Streifenmusters, synchronisiertes RGB-Farbrad 6 verwendet, das sich im externen Lichtquellengehäuse befindet. Das RGB-Farbrad kann allerdings auch im Projektorgehäuse vorgesehen sein.

Nach vorbekannten Lösungen können Objekte mit unterschiedlicher Reflektivität nur unvollständig gemessen werden, da die Musterprojektion mit homogener Helligkeit über das Objekt erfolgt, die unterschiedliche Reflektivität des Meßobjekts durch eine beschränkte Dynamik der Kamera oder der Kameras im Bild jedoch lokal zu Überstrahlungen oder ungenügender Aussteuerung führt, was eine komplette 3D-Datenerfassung des Objekts innerhalb einer Messung mit einfacher Belichtungszeit nicht möglich macht. Dieser Nachteil steht einem Einsatz der vorbekannten Meßsysteme zur Qualitätssicherung in der Produktion entgegen, da hier kurze Meßzeiten gefordert sind und Objekte unterschiedlicher Reflektivität ohne Probenvorbereitung gemessen werden müssen. Nach einer Weiterbildung der Erfindung wird die örtliche Reflektivität des Objekts bestimmt und wird die Helligkeit des Streifenmusters örtlich an die Reflektivität des Objekts angepaßt, wodurch die beschriebenen Nachteile vermieden werden können.

## Patentansprüche

1. Verfahren zur Bestimmung der 3D-Koordinaten eines Objekts (2),
bei dem ein Streifenmuster auf das Objekt (2) projiziert wird,
und das von dem Objekt (2) reflektierte Licht aufgenommen und ausgewertet wird,
**dadurch gekennzeichnet,**
**daß** das Streifenmuster durch ein bildgebendes Element auf das Objekt (2) projiziert wird
und **daß** die bestimmten 3D-Koordinaten des Objekts (2) mit den Soll-3D-Koordinaten des Objekts verglichen werden und daß die Formabweichung auf das Objekt (2) projiziert wird.

2. Verfahren nach Anspruch 1, **dadurch gekennzeichnet, daß** die Formabweichung in einer Falschfarbendarstellung auf das Objekt projiziert wird.

3. Verfahren nach Anspruch 1 oder 2, **dadurch gekennzeichnet, daß** das Streifenmuster durch ein LCOS-Display, ein Spiegelarray oder ein LCD-Display auf das Objekt projiziert wird.

4. Verfahren nach Anspruch einem der vorhergehenden Ansprüche, **dadurch gekennzeichnet, daß** das Licht der Lichtquelle (4) zum Erzeugen des Streifenmusters über einen Flüssigkeitslichtleiter (5) dem Objekt (2) zugeführt wird.

5. Verfahren nach einem der vorhergehenden Ansprüche, **dadurch gekennzeichnet, daß** die aufgenommenen Bilddaten in einem Kameraspeicher zwischengespeichert werden und anschließend zur Auswertung weitergeleitet werden.

6. Verfahren nach einem der vorhergehenden Ansprüche, **dadurch gekennzeichnet, daß** die Triangulationsbasis und/oder der Triangulationswinkel veränderbar sind.

7. Verfahren nach einem der vorhergehenden Ansprüche, **dadurch gekennzeichnet, daß** die örtliche Reflektivität des Objekts (2) bestimmt wird und daß die Helligkeit des Streifenmusters örtlich an die Reflektivität des Objekts (2) angepaßt wird.

8. Verfahren nach Anspruch 7, **dadurch gekennzeichnet, daß** die Bestimmung der Reflektivität des Objekts (2) und die Anpassung der Helligkeit des Streifenmusters'iterativ erfolgen.

9. Vorrichtung zur Bestimmung der 3D-Koordinaten eines Objekts (2) mit einem Projektor (1) zum Projizieren eines Streifenmusters auf das Objekt (2), einer oder mehreren Kameras (3) zum Aufnehmen des von dem Objekt reflektierten Lichts und einer Auswerteeinrichtung zur Auswertung der aufgenommenen Bilder,
**dadurch gekennzeichnet,**
**daß** der Projektor (1) ein bildgebendes Element zum Projizieren des Streifenmusters auf das Objekt (2) aufweist
und **daß** die Vorrichtung eine Einrichtung zum Vergleichen der bestimmten 3D-Koordinaten des Objekts (2) mit den Soll-3D-Koordinaten des Objekts und zum Projizieren der Formabweichung auf das Objekt (2) aufweist.

10. Vorrichtung nach Anspruch 9, **gekennzeichnet durch** ein Farbrad (6) zum Projizieren der Formabweichung in einer Falschfarbendarstellung auf das Objekt (2).

11. Vorrichtung nach Anspruch 9 oder 10, **dadurch gekennzeichnet, daß** der Projektor (1) ein LCOS-Display, ein Spiegelarray und/oder ein LCD-Display zum Projizieren des Streifenmusters auf das Objekt (2) aufweist.

12. Vorrichtung nach einem der Ansprüche 9 bis 11, **gekennzeichnet durch** eine Lichtquelle (4) und einen Flüssigkeitslichtleiter (5) zum Zuführen des Lichts zum Projektor (1).

13. Vorrichtung nach einem der Ansprüche 9 bis 12, **dadurch gekennzeichnet, daß** die Kamera (3) einen Kameraspeicher zum Zwischenspeichern der aufgenommenen Bilddaten aufweist.

14. Vorrichtung nach einem der Ansprüche 9 bis 13, **dadurch gekennzeichnet, daß** die Triangulationsbasis und/oder der Triangulationswinkel veränderbar sind.

15. Vorrichtung nach einem der Ansprüche 9 bis 14, **gekennzeichnet durch** eine Auswerteeinrichtung zum Bestimmen der örtlichen Reflektivität des Objekts (2) und zum örtlichen Anpassen der Helligkeit des Streifenmusters an die Reflektivität des Objekts (2), wobei die Bestimmung der Reflektivität des Objekts und die Anpassung der Helligkeit des Streifenmusters vorzugsweise iterativ erfolgen.
